(19) Europäisches Patentamt
European Patent Office
Office européen des brevets

(11) **EP 2 843 788 A2**

(12) **EUROPÄISCHE PATENTANMELDUNG**

(43) Veröffentlichungstag:
04.03.2015  Patentblatt 2015/10

(51) Int Cl.:
*H02J 3/46* (2006.01)      *H02J 3/38* (2006.01)
*F01K 13/02* (2006.01)      *H02J 3/24* (2006.01)
*G06Q 50/06* (2012.01)

(21) Anmeldenummer: 14169314.3

(22) Anmeldetag: **21.05.2014**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **16.08.2013  DE 102013108879**

(71) Anmelder: **RWE Effizienz GmbH
44139 Dortmund (DE)**

(72) Erfinder:
• **Matics, Dr.-Ing. Jens
42579 Heiligenhaus (DE)**
• **Kritzer, Marcel
44139 Dortmund (DE)**
• **Gropengießer, Björn
58575 Hemer (DE)**

(74) Vertreter: **Cohausz & Florack
Patent- und Rechtsanwälte
Partnerschaftsgesellschaft
Bleichstraße 14
40211 Düsseldorf (DE)**

(54) **Verfahren zum Betreiben eines Kraftwerkssystems**

(57)    Die Erfindung betrifft ein Verfahren zum Betreiben eines Kraftwerkssystems (34) umfassend eine Mehrzahl von verteilt angeordneten Mikro-KWK-Anlagen (2) und mindestens eine mit den verteilt angeordneten Mikro-KWK-Anlagen (2) über mindestens ein Kommunikationsnetz (28) verbundene zentrale Regelungsvorrichtung (26), umfassend Übertragen von elektrischen Einzel-Leistungszeitprognosen von zumindest einem Teil der verteilt angeordneten Mikro-KWK-Anlagen (2) an die zentrale Regelungsvorrichtung (26), wobei eine elektrische Einzel-Leistungszeitprognose einer Mikro-KWK-Anlage (2) zumindest in Abhängigkeit der thermischen Kapazitätsgrenze der Mikro-KWK-Anlage (2) von der Mikro-KWK-Anlage (2) erstellt wird, Bestimmen von mindestens einer ersten elektrischen Gesamt-Leistungszeitprognose des Kraftwerkssystems (24) durch die zentrale Regelungsvorrichtung (26) durch Akkumulieren der empfangenen Einzel-Leistungszeitprognosen, und Regeln von zumindest einem Teil der verteilt angeordneten Mikro-KWK-Anlagen (2) von der zentralen Regelungsvorrichtung (26) zumindest in Abhängigkeit der bestimmten ersten Gesamt-Leistungszeitprognose des Kraftwerkssystems (34) und einer empfangenen Leistungszeitanfrage.

Fig.2

EP 2 843 788 A2

**Beschreibung**

Die Erfindung betrifft ein Verfahren zum Betreiben eines Kraftwerkssystems umfassend eine Mehrzahl von verteilt angeordneten Mikro-KWK-Anlagen und mindestens eine mit den verteilt angeordneten Mikro-KWK-Anlagen über mindestens ein Kommunikationsnetz verbundene zentrale Regelungsvorrichtung. Darüber hinaus betrifft die Erfindung ein Kraftwerkssystem und ein Computerprogramm.

In der heutigen Zeit werden vermehrt dezentrale Kleinkraftwerke, wie Mikro-Kraft-Wärme-Kopplungsanlagen (Mikro-KWK-Anlagen) eingesetzt, um insbesondere einzelne Gebäude, wie Ein-, Zwei-, und Mehrfamilienhäuser sowie Bürogebäude, mit Energie zu versorgen. Insbesondere stellt eine Mikro-KWK-Anlage neben elektrischer Energie auch Wärmeenergie bzw. thermische Energie für das Gebäude bereit.

Eine Mikro-KWK-Anlage weist zur Bereitstellung der elektrischen Energie und der thermischen Energie eine Kraft-Wärme-Kopplungseinrichtung (KWK-Einrichtung) auf. KWK-Einrichtungen zeichnen sich durch einen hohen Gesamt-Nutzungsgrad aus, da sie neben thermischer Leistung gleichzeitig auch elektrische Leistung erzeugen. Eine KWK-Einrichtung wird zur Erzeugung der elektrischen und thermischen Leistung mit einem geeigneten Brennstoff, wie Erdgas, Erdöl, Biogas, Klärgas, Deponiegas, Pflanzenöl, Holz, Pellets, etc., betrieben.

Die von der KWK-Einrichtung erzeugte thermische Leistung kann zunächst in einer thermischen Speichereinrichtung zwischengespeichert und beispielsweise über Wärmetauscher für die Wohnwärme und das Warmwasser abgegeben werden. Die bei der Erzeugung der Wärme gleichzeitig erzeugte elektrische Energie kann im Gebäude unmittelbar verbraucht und/oder in das öffentliche elektrische Netz, insbesondere ein Niederspannungsnetz, eingespeist werden. Insbesondere ist die Generierung von elektrischer Energie stets mit der Generierung von thermischer Energie verbunden.

Ein stetig wachsendes Problem der elektrischen Stromnetze ist die erhebliche Schwankung der im Netz verfügbaren elektrischen Energie. So ist beispielsweise bei stürmischem und/oder wolkenlosem Wetter aufgrund der erheblichen Anzahl von Windkraftanlagen und/oder Solaranlagen die im Netz vorhandene elektrische Energie sehr groß. Dies kann zu einer Überlast und einem Zusammenbruch des Stromnetzes führen. Um dies zu vermeiden, ist es aus dem Stand der Technik bekannt die einzelnen dezentral angeordneten Kraftwerke durch lokale Steuerungseinrichtungen bzw. Regelungseinrichtungen vom öffentlichen Stromnetz zu trennen. Dies ist jedoch ineffizient, da zur Verfügung stehender Strom nicht genutzt werden kann.

Hingegen ist bei starker Nachfrage und einer Wetterlage mit geringen Wind und wenig Sonne die im Netz vorhandene elektrische Energie gering. Um dieses Problem zu vermeiden, werden in der Regel herkömmliche Kraftwerke auch während Phasen mit hoher Stromproduktion nicht runtergefahren, um beispielsweise bei einem Abflauen des Windes weiterhin eine ausreichende Strommengen bereitzustellen. Dies ist jedoch ebenfalls ineffizient und vergrößert das zuvor beschriebene Problem der Überlast. Ferner können sich Netzschwankungen können sich auch an der Strombörse im Preis widerspiegeln.

Daher liegt der Erfindung die Aufgabe zugrunde, ein Verfahren zum Betreiben eines Kraftwerkssystems mit einer Mehrzahl von verteilt angeordneten Mikro-KWK-Anlagen und ein entsprechendes Kraftwerkssystem zur Verfügung zu stellen, welches in effizienter Weise die Schwankungen der im Stromnetz vorhandenen Energiemenge zumindest reduziert.

Die Aufgabe wird gemäß einem ersten Aspekt der Erfindung durch ein Verfahren zum Betreiben eines Kraftwerkssystems umfassend eine Mehrzahl von verteilt angeordneten Mikro-KWK-Anlagen und mindestens eine zentrale Regelungsvorrichtung gemäß Patentanspruch 1 gelöst. Das Verfahren zum Betreiben eines Kraftwerkssystems umfassend eine Mehrzahl von verteilt angeordneten Mikro-KWK-Anlagen und mindestens eine mit den verteilt angeordneten Mikro-KWK-Anlagen über mindestens ein Kommunikationsnetz verbundene zentrale Regelungsvorrichtung umfasst die Schritte:

- Übertragen von elektrischen Einzel-Leistungszeitprognosen von zumindest einem Teil der verteilt angeordneten Mikro-KWK-Anlagen an die zentrale Regelungsvorrichtung,
- wobei eine elektrische Einzel-Leistungszeitprognose einer Mikro-KWK-Anlage zumindest in Abhängigkeit der thermischen Kapazitätsgrenze der Mikro-KWK-Anlage von der Mikro-KWK-Anlage erstellt wird,
- Bestimmen von mindestens einer ersten elektrischen Gesamt-Leistungszeitprognose des Kraftwerkssystems durch die zentrale Regelungsvorrichtung durch Akkumulieren der empfangenen Einzel-Leistungszeitprognosen,
- Regeln von zumindest einem Teil der verteilt angeordneten Mikro-KWK-Anlagen von der zentralen Regelungsvorrichtung zumindest in Abhängigkeit der bestimmten ersten Gesamt-Leistungszeitprognose des Kraftwerkssystems und einer empfangenen Leistungszeitanfrage.

Indem im Gegensatz zum Stand der Technik eine Mehrzahl von dezentral angeordneten Mikro-KWK-Anlagen von einer entfernt angeordneten zentralen Regelungsvorrichtung bzw. Steuerungsvorrichtung in Abhängigkeit von elektrischen Leistungszeitprognosen basierend auf der jeweiligen thermischen Grenzkapazität der Mikro-KWK-Anlagen und einer Regelleistungsanfrage für einen zukünftigen Zeitraum geregelt bzw. gesteuert wird, können gefährliche Schwankungen der Netzspannung vor ihrem Entstehen zumindest reduziert werden. Zudem ist erkannt worden, dass durch das erfindungsgemäße Verfahren die einzelnen Mikro-KWK-Anlage mit einer erhöhten Effizienz betrieben werden können.

Die mindestens zwei Mikro-KWK-Anlagen, vorzugsweise können eine Vielzahl von Mikro-KWK-Anlagen vorgesehen sein, weisen insbesondere jeweils eine elektrische Leistung von bis zu 20 kW auf. Eine derartige Mikro-KWK-Anlage ist besonders für Wohngebäude oder Bürogebäude geeignet.

Eine Mikro-KWK-Anlage umfasst in der Regel eine Kraft-Wärme-Kopplungseinrichtung (KWK-Einrichtung) mit mindestens einem Motor und mindestens einem Generator. Die KWK-Einrichtung kann mit einem geeigneten Brennstoff, insbesondere Erdgas, betrieben werden. Die beim Verbrennen des Brennstoffs entstehende Energie wird in thermische und elektrische Energie gewandelt.

Mit der KWK-Einrichtung ist eine thermische Speichereinrichtung zum Speichern der erzeugten thermischen Energie verbunden. Wird elektrische Energie von der KWK-Einrichtung generiert, so wird die gleichzeitig generierte thermische Energie in der thermischen Speichereinrichtung gespeichert. Von der thermischen Speichereinrichtung kann die thermische Energie beispielsweise über einen Wärmetauscher bei Bedarf an die im Gebäude angeordneten Verbraucher abgegeben werden.

Zum (lokalen) Regeln bzw. Steuern zumindest der KWK-Einrichtung kann eine (lokale) Regelungseinrichtung bzw. Steuerungseinrichtung vorgesehen sein. Die Regelungseinrichtung kann insbesondere Rechenmittel, Speichermittel, etc. umfassen. Beispielsweise kann ein Mikroprozessor, ein Computer, etc. als Regelungseinrichtung eingesetzt werden. Die Regelungseinrichtung verfügt insbesondere über eine bidirektionale Kommunikationsverbindung zu der KWK-Einrichtung und der thermischen Speichereinrichtung.

Die Regelungseinrichtung ist insbesondere dazu eingerichtet, eine thermische Grenzkapazität zu bestimmen. Beispielsweise kann die Regelungseinrichtung eingerichtet sein, eine thermische Lastprognose für das Gebäude für einen ersten Zeitraum zu erstellen. Bei dem ersten Zeitraum kann es sich beispielsweise um die nächste Woche, den nächsten Tag, die nächste Stunde, etc. handeln. Eine Lastprognose gibt insbesondere an, wie viel thermische Energie voraussichtlich in dem ersten Zeitraum in dem Gebäude verbraucht/benötigt wird. Insbesondere kann es eine über die Zeit variable Funktion sein.

Zumindest in Abhängigkeit der thermischen Kapazitätsgrenze, insbesondere in Abhängigkeit der Lastprognose und vorzugsweise zudem in Abhängigkeit der noch zur Verfügung stehenden thermischen Speicherkapazität der Speichereinrichtung einer ersten Mikro-KWK-Anlage, kann von der ersten Mikro-KWK-Anlage mindestens eine elektrische Einzel-Leistungszeitprognose der ersten Mikro-KWK-Anlage erstellt und an die zentrale Regelungsvorrichtung übertragen werden. Ferner kann mindestens eine weitere Mikro-KWK-Anlage eingerichtet sein, eine zumindest in Abhängigkeit einer Kapazitätsgrenze, insbesondere einer thermischen Lastprognose, der weiteren Mikro-KWK-Anlage bestimmte weitere elektrische Einzel-Leistungszeitprognose der weiteren Mikro-KWK-Anlage an die zentrale Regelungsvorrichtung zu übertragen. Vorzugsweise können sämtliche Mikro-KWK-Anlagen jeweils mindestens eine Einzel-Leistungszeitprognose basierend auf der jeweiligen thermischen Kapazitätsgrenze an die zentrale Regelungsvorrichtung senden.

Es ist insbesondere erkannt worden, dass Mikro-KWK-Anlagen zusätzliche elektrische Kapazitäten haben, die jedoch von der thermischen Kapazitätsgrenze, insbesondere von der thermischen Lastprognose und/oder von der noch zur Verfügung stehenden Wärmekapazität der jeweiligen Speichereinrichtung abhängen. Bei Bedarf kann beispielsweise zusätzliche elektrische Energie generiert oder verbraucht werden, bis die thermische Kapazitätsgrenze der Mikro-KWK-Anlage erreicht ist. Bei Erreichen der thermischen Kapazitätsgrenze ist keine weitere Stromgenerierung oder kein weiterer Stromverbrauch möglich.

Eine Einzel-Leistungszeitprognose gibt eine potentielle zukünftige elektrische Leistungsfähigkeit einer Mikro-KWK-Anlage an. Beispielsweise kann die Einzel-Leistungszeitprognose für eine von der Zeit und/oder Leistung abhängige Funktion sein.

Die zentrale Regelungsvorrichtung ist dazu eingerichtet, aus der Mehrzahl von Einzel-Leistungszeitprognose der mindestens zwei Mikro-KWK-Anlagen eine Gesamt-Leistungszeitprognose des gesamten Kraftwerkssystems zu erstellen. Insbesondere können die empfangenen Einzel-Leistungszeitprognose akkumuliert werden. Die Gesamt-Leistungszeitprognose gibt eine potentielle zukünftige elektrische Leistungsfähigkeit des gesamten Kraftwerkssystems an.

Zudem ist die zentrale Regelungsvorrichtung dazu eingerichtet, Leistungszeitanfragen zu empfangen. Unter einer Leistungszeitanfrage ist vorliegend eine Anfrage an das Kraftwerkssystem zu verstehen, ob es in der Lage ist, eine bestimmte Regelleistung für einen zukünftigen bestimmten Zeitraum zur Verfügung stellen, um beispielsweise zukünftige Netzschwankungen zu reduzieren. Wird eine Leistungszeitanfrage empfangen, so können von der zentralen Regelungsvorrichtung die Leistungszeitanfrage und die zuvor bestimmte (aktuelle) Gesamt-Leistungszeitprognose des Kraftwerkssystems ausgewertet und in Abhängigkeit der Auswertung das Kraftwerkssystem, insbesondere zumindest eine Mikro-KWK-Anlage, geregelt werden. Ist die Auswertung positiv, wird also beispielsweise festgestellt, dass der Leistungsanfrage entsprochen werden kann, so kann die zentrale Regelungsvorrichtung mindestens einen Steuerungsbefehl umfassend mindestens einen elektrischen Sollwert zusammen mit einer Laufzeitangabe an mindestens eine Mikro-KWK-Anlage übertragen, um die angefragte Regelleistung bereitzustellen.

Es versteht sich, dass die Regelung bzw. Steuerung der Mikro-KWK-Anlagen auch darin bestehen kann, keine elektrischen Sollwerte den einzelnen Mikro-KWK-Anlagen vorzugeben. Dies kann beispielsweise dann erfolgen, wenn die potentielle zukünftige Leistungsfähigkeit des Kraftwerksystems nicht ausreicht, die Leistungsanfrage zu bedienen.

Durch die Bündelung einer Vielzahl von dezentralen Mikro-KWK-Anlagen zu einem einzigen (virtuellen) Kraftwerk kann in einfacher Weise eine größere Regelleistung in Abhängigkeit der jeweiligen thermischen Kapazitätsgrenzen der Mikro-KWK-Anlagen bereitgestellt werden.

Gemäß einem ersten Ausführungsbeispiel des erfindungsgemäßen Verfahrens kann von mindestens einer der Mikro-KWK-Anlagen eine Mehrzahl von elektrischen Einzel-Leistungszeitprognosen an die zentrale Regelungsvorrichtung übertragen werden. Die Mehrzahl von elektrischen Einzel-Leistungszeitprognosen kann mindestens eine positive elektrische Einzel-Leistungszeitprognose und/oder mindestens eine negative elektrische Einzel-Leistungszeitprognose umfassen. Indem vorzugsweise jede Mikro-KWK-Anlage eine Mehrzahl von elektrischen Einzel-Leistungszeitprognosen erstellt und überträgt, ist ein flexibler und effizienterer Betrieb des Kraftwerkssystems möglich. Beispielweise kann mindestens eine positive und mindestens eine negative elektrische Einzel-Leistungszeitprognose erstellt werden. Eine positive elektrische Einzel-Leistungszeitprognose umfasst eine positive Regelleistung, die zukünftig für eine bestimmte Laufzeit in Netz gespeist werden kann, während die negative elektrische Einzel-Leistungszeitprognose eine negative Regelleistung umfasst, die zukünftig für eine bestimmte Laufzeit dem Netz entzogen werden kann.

Die mindestens eine negative Einzel-Leistungszeitprognose umfassend eine negative Regelleistung von einer Mikro-KWK-Anlage kann insbesondere dann erstellt werden, wenn diese eingerichtet ist, Energie aus dem Stromnetz abzuführen bzw. zu verbrauchen. Beispielsweise kann in einer thermischen Speichereinrichtung eine elektrische Heizeinrichtung, wie ein Heizstab vorgesehen, welche/r elektrische Energie in thermische Energie wandeln kann. Bei einer Leistungsanfrage für eine negative Regelleistung, beispielsweise aufgrund einer prognostizierten hohen Stromproduktion durch erneuerbare Energien, kann zur Vermeidung einer Überlast das Kraftwerkssystem negative Regelleistung bereitstellen. Vorzugweise können, beispielsweise bei einem stufenweise betreibbaren Heizstab, eine Mehrzahl von negativen Einzel-Leistungszeitprognose von einer Mikro-KWK-Anlage, beispielsweise für jede Stufe eine, erstellt und an die zentrale Regelungsvorrichtung übertragen werden.

Vorzugsweise kann von der mindestens einen Mikro-KWK-Anlage mindestens eine maximale elektrische Einzel-Leistungszeitprognose (positiv und/oder negativ) und mindestens eine minimale elektrische Einzel-Leistungszeitprognose (positiv und/oder negativ) an die zentrale Regelungsvorrichtung übertragen werden. Beispielsweise kann eine Mikro-KWK-Anlage auswerten, wie lang sie mit minimaler (positiver und/oder negativer) Regelleistung betrieben werden kann bzw. wie lang sie mit maximaler (positiver und/oder negativer) Regelleistung betrieben werden kann. Vorzugweise weist eine Einzel-Leistungszeitprognose daher stets einen Leistungswert und eine zugehörige Laufzeit auf.

Gemäß einem weiteren Ausführungsbeispiel des erfindungsgemäßen Verfahrens kann die empfangene Leistungszeitanfrage zumindest eine bestimmte elektrische Regelleistung für eine bestimmte Laufzeit umfassen. Von der zentralen Regelungsvorrichtung kann zumindest überprüft werden, ob die bestimmte elektrische Regelleistung für die bestimmte Laufzeit von dem Kraftwerkssystem zur Verfügung gestellt werden kann, indem zumindest die bestimmte elektrische Regelleistung für die bestimmte Laufzeit und die Gesamt-Leistungsprognose ausgewertet werden. Beispielsweise kann die bestimmte elektrische Regelleistung für die bestimmte Laufzeit mit der ersten Gesamt-Leistungszeitprognose des Kraftwerkssystems verglichen werden. So kann überprüft werden, welche Gesamtleistung von den dezentral angeordneten Mikro-KWK-Anlagen für die angefragte Laufzeit zur Verfügung steht. Wird festgestellt, dass die angefragte Regelleistung für die bestimmte Laufzeit zur Verfügung gestellt werden kann, kann die zentrale Regelungsvorrichtung zumindest einen Teil der Mikro-KWK-Anlagen derart ansteuern, dass die Mikro-KWK-Anlagen die gewünschte Regelleistung ins Netz speisen und/oder aus dem Netz abführen. Es versteht sich, dass sämtliche Mikro-KWK-Anlagen oder, beispielsweise in Abhängigkeit einer vorgebbaren Prioritätenliste, nur ein Teil angesteuert werden kann/können.

Gemäß einer bevorzugten Ausführungsform des erfindungsgemäßen Verfahrens kann von mindestes einer Mikro-KWK-Anlage der mindestens einen elektrischen Einzel-Leistungszeitprognose mindestens ein erster Aufwandsparameter der Mikro-KWK-Anlage für die elektrische Einzel-Leistungszeitprognose zugeordnet werden. Durch Abgeben und/oder Aufnehmen zusätzlicher elektrischer Energie entsteht auf Seiten der Mikro-KWK-Anlage ein erhöhter Aufwand. Neben Verschleiß der eingesetzten Betriebsmittel, fallen beispielsweise Brennstoffkosten und dergleichen an. Um den Aufwand zu berücksichtigen, kann eine Mikro-KWK-Anlage vorzugsweise sämtliche Einzel-Leistungszeitprognosen mit (individuellen) ersten Aufwandsparametern verknüpfen. Der erste Aufwandsparameter ist eine Bedingung, die erfüllt werden muss, damit die in der Einzel-Leistungszeitprognose angegebene elektrischen Leistung tatsächlich abgerufen/aufgenommen werden darf. Beispielsweise kann der Aufwandsparameter in Form eines Zahlenwerts angegeben werden. Von der zentralen Regelungsvorrichtung kann bei der Bestimmung der Gesamt-Leistungszeitprognose des Kraftwerkssystems der mindestens eine erste Aufwandsparameter berücksichtigt werden. So kann ein Teil der Gesamt-Leistungszeitprognose tatsächlich nur bei Erfüllung der zusätzlichen Bedingung im Kraftwerkssystems zur Verfügung stehen. Auch besteht die Möglichkeit, für unterschiedliche erste Aufwandsparameter unterschiedliche Gesamt-Leistungszeitprognose zu erstellen.

Vorzugsweise kann die Leistungszeitanfrage einen zweiten Aufwandsparameter umfassen. Der zweite Aufwandsparameter, beispielsweise ebenfalls ein Zahlenwert, kann angeben, unter welcher Bedingung die gewünschte Regeleistung für eine bestimmte Laufzeit gewünscht ist. Gemäß einer Ausführungsform kann von der zentralen Regelungsvorrichtung überprüft werden, ob die bestimmte elektrische Regelleistung für die bestimmte Laufzeit für den zweiten Aufwandsparameter zur Verfügung gestellt werden kann, indem die bestimmte elektrische Regelleistung für den bestimmten Zeitraum für den zweiten Aufwandsparameter und die von mindestens einem ersten Aufwandsparameter abhängige Gesamt-Leistungszeitprognose ausgewertet werden. Beispielsweise kann die bestimmte elektrische Regelleistung für den bestimmten Zeitraum für den zweiten Aufwandsparameter mit dem mindestens einen ersten Aufwandsparameter der mindestens einen Gesamt-Leistungszeitprognose des Kraftwerkssystems verglichen werden. Es kann eine erste Gesamt-Leistungszeitprognose nur unter der Bedingung eines ersten Aufwandsparameters mit dem Zahlenwert X zur Verfügung stehen während eine weitere Gesamt-Leistungszeitprognose nur unter der Bedingung eines ersten Aufwandsparameters mit dem Zahlenwert Y zur Verfügung steht. Wird eine Leistung entsprechend der ersten Gesamt-Leistungszeitprognose angefragt und liegt der Zahlenwert des zweiten Aufwandsparameters bei größer oder gleich X, so steht die gewünschte Regelleistung für die bestimmte Laufzeit tatsächlich zur Verfügung. Ist der Zahlenwert des zweiten Aufwandsparameters kleiner X, beispielsweise Y, steht die Regelleistung für die bestimmte Laufzeit gemäß der ersten Gesamt-Leistungszeitprognose nicht zur Verfügung. Jedoch steht in diesem Fall die weitere Gesamt-Leistungszeitprognose zur Verfügung. In einfacher Weise kann verhindert werden, dass der Aufwand für den zusätzlichen Betrieb einer Mikro-KWK-Anlage den Nutzen des zusätzlichen Betriebs übersteigt.

Beispielsweise kann es sich bei den Zahlenwerten des ersten bzw. zweiten Aufwandsparameters um einen monetären Betrag handeln, der zu dem Aufwand einer Mikro-KWK-Anlage für die Bereitstellung der negativen oder positiven Regelleistung korrespondiert bzw. den Betrag angibt, den die anfragende Partei, beispielsweise ein Stromkäufer/-verkäufer, bereit ist, für die gewünschte Leistung zu zahlen.

Um u.a. die Rechenzeit zur Bestimmung der Gesamt-Leistungszeitprognose des Kraftwerkssystems zu verringern, kann ein Teil der Mehrzahl von Mikro-KWK-Anlagen in beliebiger Weise zu einem Subnetz zusammengefasst werden. Vorzugsweise können physikalisch benachbarte und zusammenhängende Mikro-KWK-Anlagen zu einem Subnetz zusammengefasst werden. Gemäß einer Ausführungsform schlägt die Erfindung insbesondere vor, die Mikro-KWK-Anlagen eines Niederspannungsnetzes zu einem Subnetz zusammenzufassen. Ein Niederspannungsnetz kann zwischen 100 und 300 Gebäuden umfassen und eine Länge je nach Netzform von bis zu 1000 m aufweisen. Das Niederspannungsnetz kann eine Spannung (zwischen Phase und N) von 230V aufweisen und ist insbesondere durch einen Ortsnetztrafo an ein Mittelspannungsnetz angeschlossen. Die elektrischen Einzel-Leistungszeitprognosen der Mikro-KWK-Anlagen des Subnetzes können zu einer elektrischen Subnetz-Leistungszeitprognose akkumuliert werden. Vorzugsweise können in einem ersten Teilschritt aus den Einzel-Leistungszeitprognosen der Mikro-KWK-Anlagen eines Subnetzes zunächst entsprechende Subnetz-Leistungszeitprognosen erstellt werden. Aus der Mehrzahl von Subnetz-Leistungszeitprognosen kann dann die Gesamt-Leistungszeitprognose des Kraftwerkssystems bestimmt werden.

Durch die Bündelung von mehreren Mikro-KWK-Anlagen in Subnetze basierend auf ihrer Ortsnetzzugehörigkeit kann bei Bedarf eine regionale Steuerung bzw. Regelung des Kraftwerkssystems erfolgen. Beispielsweise können bei Bedarf nur die Mikro-KWK-Anlagen eines oder mehrerer bestimmter Subnetze von der zentralen Regelungsvorrichtung in obiger Weise angesteuert werden.

Darüber hinaus kann gemäß einer weiteren Ausführungsform des erfindungsgemäßen Verfahrens vorgesehen sein, dass die elektrischen Einzel-Leistungszeitprognosen von zumindest einem Teil der Mikro-KWK-Anlagen in vorgegebenen Zeitabständen an die zentrale Regelungsvorrichtung übertragen werden. Vorzugsweise können die Einzel-Leistungszeitprognosen automatisiert und in periodischen Zeitabständen an die zentrale Regelungsvorrichtung übertragen werden. Eine stets aktualisierte Gesamt-Leistungsprognose liegt in der zentralen Regelungsvorrichtung vor.

Ein weiterer Aspekt der Erfindung ist ein Kraftwerkssystem gemäß Patentanspruch 9. Das Kraftwerkssystem umfasst eine zentrale Regelungsvorrichtung. Das Kraftwerkssystem umfasst eine Mehrzahl von verteilt angeordneten und mit der zentralen Regelungsvorrichtung über mindestens ein Kommunikationsnetz verbundenen Mikro-KWK-Anlagen. Zumindest zwei der verteilt angeordneten Mikro-KWK-Anlagen sind eingerichtet, jeweils mindestens eine elektrische Einzel-Leistungszeitprognose an die zentrale Regelungsvorrichtung zu übertragen. Zumindest die zwei Mikro-KWK-Anlagen sind eingerichtet, jeweils mindestens eine elektrische Einzel-Leistungszeitprognose zumindest in Abhängigkeit der thermischen Grenzkapazität der jeweiligen Mikro-KWK-Anlagen zu erstellen. Die zentrale Regelungsvorrichtung ist eingerichtet, eine elektrische Gesamt-Leistungszeitprognose des Kraftwerkssystems durch Akkumulierung der empfangenen Einzel-Leistungszeitprognosen zu bestimmen. Die zentrale Regelungsvorrichtung ist eingerichtet, zumindest einen Teil der verteilt angeordneten Mikro-KWK-Anlagen zumindest in Abhängigkeit der bestimmten Gesamt Leistungszeitprognose des Kraftwerkssystems und einer empfangenen Leistungszeitanfrage zu regeln.

Insbesondere kann das zuvor beschriebene Verfahren zum Betreiben des zuvor beschriebenen Kraftwerkssystems eingesetzt werden.

Ein noch weiterer Aspekt der Erfindung ist ein Computerprogramm mit Instruktionen ausführbar auf einem Prozessor derart, dass ein zuvor beschriebenes Kraftwerkssystem gemäß dem zuvor beschriebenen Verfahren gesteuert bzw. geregelt wird.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren zum Betreiben eines Kraftwerkssystems, das erfindungsgemäße Kraftwerkssystem und das erfindungsgemäße Computerprogramm auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig.1 eine schematische Ansicht eines Ausführungsbeispiels eines Gebäudes umfassend eine Mikro-KWK-Anlage von einem Kraftwerkssystem gemäß der vorliegenden Erfindung;

Fig.2 eine schematische Ansicht eines Ausführungsbeispiels eines Kraftwerkssystems gemäß der vorliegenden Erfindung;

Fig.3 ein schematisches Diagramm eines Ausführungsbeispiels eines Verfahrens gemäß der vorliegenden Erfindung zum Betreiben eines Kraftwerkssystems umfassend eine Mehrzahl von verteilt angeordneten Mikro-KWK-Anlagen;

Fig. 4a ein schematisches Diagramm einer Subnetz-Leistungszeitprognose; und

Fig. 4b ein schematisches Diagramm einer Gesamt-Leistungszeitprognose.

In den Figuren werden für gleiche Elemente gleiche Bezugszeichen verwendet.

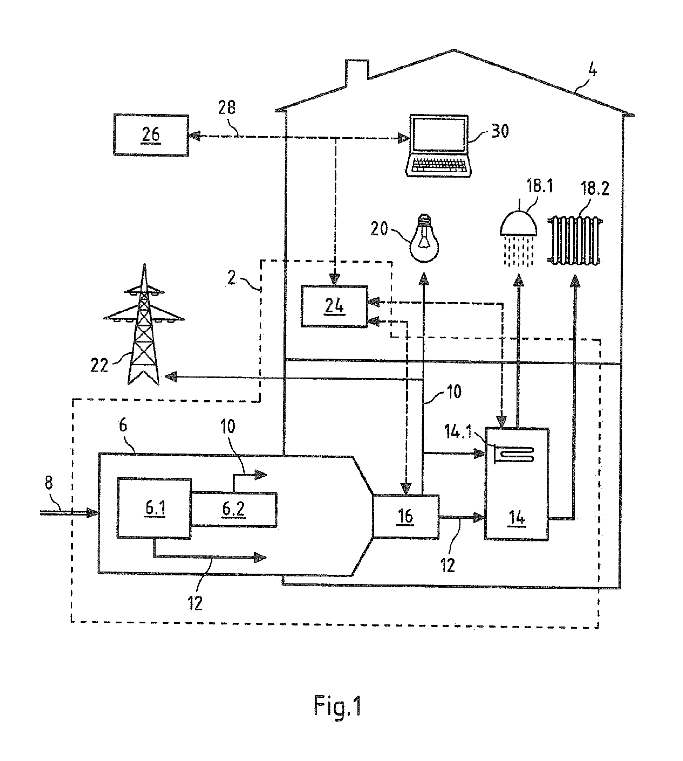

Figur 1 zeigt eine schematische Ansicht eines Ausführungsbeispiels einer Mikro-KWK-Anlage 2, welche Teil eines Kraftwerkssystems gemäß der Erfindung ist. Die dargestellte Mikro-KWK-Anlage 2 kann beispielsweise eine elektrische Leistung zwischen 1 bis 20 kW bereitstellen. Die Mikro-KWK-Anlage 2 ist vorliegend in einem Gebäude 4 installiert. Bei dem Gebäude 4 kann es sich beispielsweise um ein Ein-, Zwei-, oder Mehrfamilienhaus, ein Bürogebäude oder dergleichen handeln. Es versteht sich, dass eine Mikro-KWK-Anlage 2 auch zur Versorgung von einer Mehrzahl an (kleineren) Gebäuden eingesetzt werden kann.

Die vorliegende Mikro-KWK-Anlage 2 umfasst eine KWK-Einrichtung 6 mit einem Motor 6.1 und einem Generator 6.2. Betrieben wird die vorliegende KWK-Einrichtung 6 mit Erdgas. Hierzu ist ein Erdgasanschluss 8 vorgesehen. Es versteht sich, dass gemäß anderen Varianten der Erfindung auch ein anderer Brennstoff verwendet werden kann.

Während der Motor 6.1 thermische Energie erzeugt und diese über eine Leitung 12 an eine thermische Speichereinrichtung 14 liefert, wird durch den Generator 6.2 elektrische Energie erzeugt und über eine elektrische Leitung 10 beispielsweise an elektrische Verbraucher 20 des Gebäudes 4 abgegeben. Die Generierung von elektrischer Energie ist jedoch durch die thermische Kapazitätsgrenze begrenzt, da die Stromgenerierung stets mit der Generierung von thermischer Energie verknüpft ist.

Vorzugsweise ist die KWK-Einrichtung 6 eine stufenlos einstellbare KWK-Einrichtung 6. Insbesondere kann die KWK-Einrichtung 6 zwischen einer minimalen elektrischen Leistung und einer maximalen elektrischen Leistung (Nennleistung) stufenlos betrieben werden. Die KWK-Einrichtung 6 weist zur Steuerung ein Steuergerät 16 auf. Das Steuergerät 16 ist zum Steuern des Motors 6.1 und/oder des Generators 6.2 in Abhängigkeit von empfangenen Leistungssollwerten eingerichtet. Insbesondere ist das Steuergerät 16 eingerichtet, empfangene Leistungssollwerte in geeignete Steuersignale zu transformieren und/oder aktuelle Zustandsdaten der KWK-Einrichtung 6, wie die elektrische Ist-Leistung und/oder die thermische Ist-Leistung, zu erfassen und zur Verfügung zu stellen.

Die thermische Speichereinrichtung 14 kann einen (nicht gezeigten) Wärmeaustauscher umfassen. Über weitere Leitungen können thermische Verbraucher 18.1, 18.2 im Gebäude 4 mit der im Speicher 14 gespeicherten thermischen Energie versorgt werden. Ferner kann die thermische Speichereinrichtung 14 über mindestens einen (nicht gezeigten) Temperatursensor zum Messen der Speichertemperatur verfügen. Insbesondere kann die Speichereinrichtung 14 zwischen einer minimalen und einer maximalen Temperatur betrieben werden.

Darüber hinaus kann die thermische Speichereinrichtung 14 einen elektrisch betreibbaren Heizstab 14.1 aufweisen. Der Heizstab 14.1 kann insbesondere dazu eingerichtet sein, das Speicherfluid, insbesondere Wasser, zu erwärmen. Mit anderen Worten kann der Heizstab 14.1 elektrische Energie in thermische Energie wandeln. Beispielsweise kann ein dreistufig regelbarer Heizstab 14.1 vorgesehen sein.

Über elektrische Leitungen 10 können in dem Gebäude 4 angeordnete elektrische Verbraucher 20 mit Strom versorgt werden. Darüber hinaus weist die Mikro-KWK-Anlage 2 einen elektrischen Anschluss zum öffentlichen elektrischen Netz 22, insbesondere einem Niederspannungsortnetz 22, auf. Dies ermöglicht im Bedarfsfall einerseits den Bezug von elektrischer Energie aus dem öffentlichen elektrischen Netz 22, beispielsweise zum Betreiben der elektrischen Verbraucher 20 und/oder des elektrischen Heizstabs 14.1, und ermöglicht andererseits die von der KWK-Einrichtung 6 erzeugte elektrische Energie ins öffentliche elektrische Netz 22 zu speisen.

Darüber hinaus umfasst die abgebildete Mikro-KWK-Anlage 2 eine lokale Regelungseinrichtung 24 bzw. lokale Steuerungseinrichtung. Die Regelungseinrichtung 24 kann insbesondere eine Recheneinrichtung 14 sein und Rechenmittel, wie einen Prozessor, Speichermittel, etc. umfassen. Die Regelungseinrichtung 24 ist dazu eingerichtet, die Mikro-KWK-Anlage 2 zu steuern bzw. zu regeln. Beispielsweise kann die Regelungseinrichtung 24 Leistungssollwerte für die KWK-Einrichtung 6 in Abhängigkeit von empfangenen Steuerbefehlen bereitstellen. In Abhängigkeit dieser Leistungssollwerte kann dann die KWK-Einrichtung 6 von dem Steuergerät 16 betrieben werden. Ferner kann die Regelungseinrichtung 24 aktuelle Ist-Werte der KWK-Einrichtung 6, wie die aktuell erzeugte elektrische Energie und/oder thermische Energie, die aktuell ins Netz 22 gespeiste elektrische Energie, die aktuell von den Verbrauchern 20 verbrauchte elektrische Energie, und Ist-Werte der thermische Speichereinrichtung 14, wie die aktuelle Speichertemperatur, erfassen und auswerten.

Die Regelungseinrichtung 24 ist insbesondere dazu eingerichtet, eine thermische Lastprognose für einen zukünftigen Zeitraum zu bestimmen. Die Regelungseinrichtung 24 kann (regelmäßig) für einen ersten zukünftigen Zeitraum, wie dem nächsten Tag, eine thermische Lastprognose $P_{th,Prog}$ erstellen. Vorzugsweise kann die thermische Lastprognose $P_{th,Prog}$ basierend auf historischen Daten erstellt werden. Beispielsweise kann die thermische Lastprognose $P_{th,Prog}$ für Trinkwarmwasser und Heizwärme als gewichtete Linearkombination der in den letzten Tagen gemessenen Verbrauchswerte im Gebäude 4 realisiert werden. Für die thermische Leistung (als Summe aus Heizbedarf und Trinkwarmwasserbedarf) gilt:

$$P_{th,Prog}(t) = \alpha_1 \cdot P_{th,Tag-1}(t) + \alpha_2 \cdot P_{th,Tag-2}(t) + \alpha_3 \cdot P_{th,Tag-3}(t), \qquad (a)$$

mit

$$\sum_{i=1}^{3} \alpha_i = 1. \qquad (b)$$

Es hat sich gezeigt, dass $\alpha_1 = 0.6$, $\alpha_2 = 0.3$, $\alpha_3 = 0.1$ besonders zielführende Werte sind. Die unmittelbare Vergangenheit wird vorliegend stärker gewichtet, als die weiter zurückliegenden Messwerte. Es versteht sich, dass für die ersten Tage, in denen noch keine Messwerte für die oben beschriebene Berechnung vorliegen, entsprechende Werte vorgeben werden können.

Es versteht sich ferner, dass bei der Erstellung der thermischen Lastprognose $P_{th,Prog}$ auch Nutzervorgaben, wie Abwesenheitsangaben, berücksichtigt werden können. Ferner können Wetterprognosen der Regelungseinrichtung 24 zur Verfügung gestellt werden. Beispielsweise können Temperaturen und Einstrahlungsdaten postleitzahl-spezifisch für aktuelle und Prognose-Werte des nächsten Tags und/oder der nächsten drei Tage vorzugsweise der zentralen Regelungsvorrichtung 26 bereitgestellt. So können auch Wetterschwankungen, wie Temperaturschwankungen, bei der Erstellung der thermischen Lastprognose/n von der Regelungseinrichtung 24 berücksichtigt werden.

Die Regelungseinrichtung 24 einer Mikro-KWK-Anlage 2 ist ferner dazu eingerichtet, zumindest basierend auf der thermischen Kapazitätsgrenze eine elektrische Einzel-Leistungszeitprognose zu bestimmen, wie nachfolgend ausgeführt werden wird.

Die Regelungseinrichtung 24 kann über mindestens ein Kommunikationsnetz 28, wie dem Internet 28, einem Mobilfunknetz 28, etc., mit einer zentralen und entfernt angeordneten Regelungsvorrichtung 26 verbunden sein. Die zentrale Regelungsvorrichtung 26 kann insbesondere in einer Leitwarte angeordnet sein.

Die zentrale Regelungsvorrichtung 26 bzw. zentrale Steuerungsvorrichtung, beispielsweise ein Computer oder eine ähnliche Recheneinrichtung, ist dazu eingerichtet, von der Mikro-KWK-Anlage 2 zumindest die mindestens eine erstellte elektrische Einzel-Leistungszeitprognose über das Kommunikationsnetz 28 zu empfangen. Darüber hinaus ist die zentrale Regelungsvorrichtung 26 dazu eingerichtet, Steuerbefehle, wie elektrische Sollwerte, an die Mikro-KWK-Anlage 2, insbesondere an die Regelungseinrichtung 24 der Mikro-KWK-Anlage 2, zu übertragen, um die Mikro-KWK-Anlage 2 zu steuern bzw. zu regeln.

Die Mikro-KWK-Anlage 2 kann ferner mit mindestens einer Recheneinrichtung 30, wie einem PC, einem Tablet-PC, einem Laptop, einem Smartphone, etc., verbunden sein. Die Recheneinrichtung 30 kann insbesondere dazu eingerichtet sein, bestimmte Daten der Mikro-KWK-Anlage 2, wie aktuelle und historische Verbrauchsdaten, Leistungssollwerte, Tarifdaten, einem Benutzer zu visualisieren. Diese Daten werden (ausschließlich) über die entfernt angeordnete zentrale Regelungsvorrichtung 26 bereitgestellt. Über die Recheneinrichtung 30 kann der Benutzer zudem bestimmte Vorgaben machen, wie eine gewünschte Solltemperatur für das Gebäude 4, Abwesenheitsangaben oder dergleichen. Diese Kundenvorgaben können dann von der Reglungseinrichtung 24 bei der Bestimmung der Leistungssollwerte Berücksichtigung finden.

Zusätzlich kann eine (nicht dargestellte) Zusatzheizeinrichtung, wie ein Brennwertkessel, in der Mikro-KWK-Anlage 2 vorgesehen sein. Die Zusatzheizeinrichtung kann insbesondere zur zusätzlichen Gewinnung von thermischer Energie eingesetzt werden. Hierzu kann die Zusatzheizeinrichtung beispielsweise mit dem Erdgasanschluss verbunden sein. Die Zusatzheizeinrichtung kann durch die Reglungseinrichtung 24 gesteuert bzw. geregelt werden.

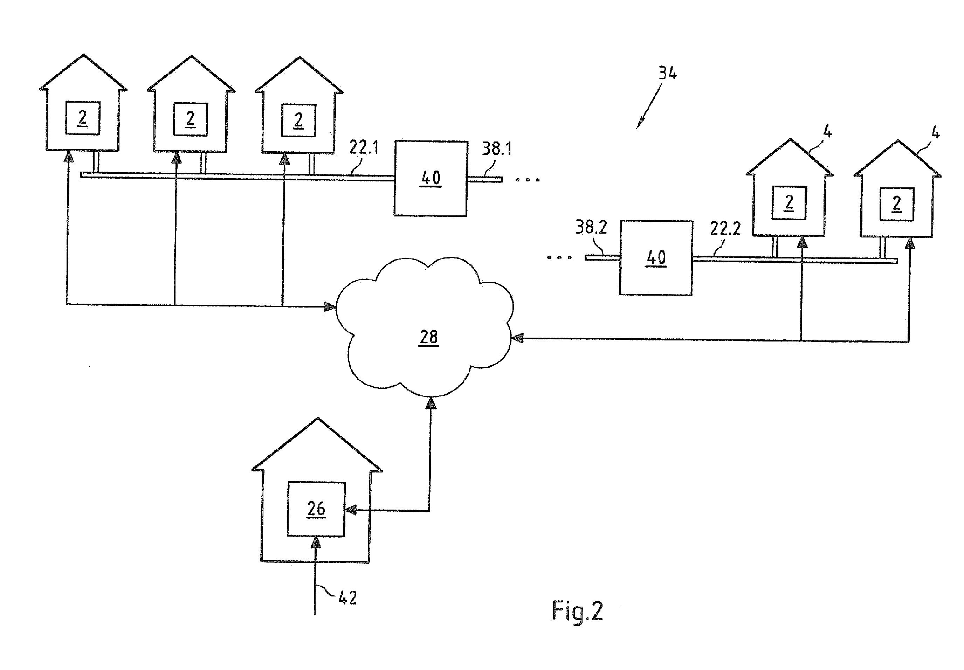

Figur 2 zeigt eine schematische Ansicht eines Ausführungsbeispiels eines Kraftwerkssystems 34 gemäß der vorliegenden Erfindung. Das Kraftwerkssystem 34 umfasst eine Mehrzahl von Mikro-KWK-Anlagen 2, wie sie beispielhaft mittels der Figur 1 beschrieben worden sind. Die Mikro-KWK-Anlagen 2 sind in Gebäuden 4 angeordnet.

Im vorliegenden Ausführungsbeispiel sind drei Mikro-KWK-Anlagen 2 in einem ersten Niederspannungsnetz 36.1 und zwei weitere Mikro-KWK-Anlagen 2 in einem weiteren Niederspannungsnetz 36.2 angeordnet. Das jeweilige Niederspannungsnetz 36.1, 36.2 ist jeweils über einen Ortsnetztransformator 40 an ein Mittelspannungsnetz 38.1, 38.2 angeschlossen.

Die dargestellte zentrale Regelungsvorrichtung 26 ist dazu eingerichtet, mit sämtlichen Mikro-KWK-Anlagen 2 bidirektional zu kommunizieren. Insbesondere kann die Regelungsvorrichtung 26 von den Mikro-KWK-Anlagen 2 zumindest elektrische Einzel-Leistungszeitprognosen empfangen und Steuerbefehle an die Mikro-KWK-Anlagen 2 übertragen.

Darüber hinaus ist die zentrale Regelungsvorrichtung 26 eingerichtet, Leistungszeitanfragen über einen Kommunikationskanal 42, beispielsweise das Internet, zu empfangene. In Abhängigkeit der Leistungszeitanfragen und einer aus den empfangenen elektrischen Einzel-Leistungszeitprognosen abgeleitete Gesamt-Leistungszeitprognose können Steuerbefehle bestimmt und an die Mikro-KWK-Anlagen 2 übertragen werden.

Es versteht sich, dass das dargestellte Kraftwerkssystem 34 neben den dargestellten Mikro-KWK-Anlagen 2 auch noch weitere Mikro-KWK-Anlagen und andere Anlagen, wie Windkraftwerke, Blockheizkraftwerke, Biomasseanlagen, Solarkraftwerke, etc. umfassen kann. Darüber hinaus versteht es sich, dass die dargestellten Mikro-KWK-Anlagen 2 unterschiedlich konfiguriert sein können. So können die Mikro-KWK-Anlagen 2 unterschiedliche elektrische Leistungen bereitstellen und/oder eine Speichereinrichtung mit und ohne einen Heizstab aufweisen.

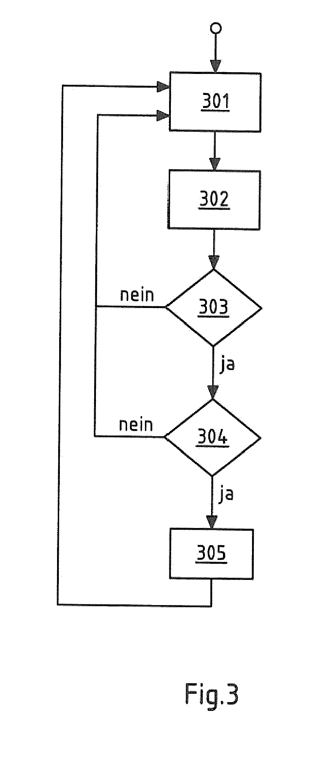

Nachfolgend wird der Betrieb des zuvor beschriebenen Kraftwerkssystems 34 mittels des in Figur 3 dargestellten Ausführungsbeispiels eines erfindungsgemäßen Verfahrens näher erläutert.

In einem ersten Schritt 301 empfängt die zentrale Regelungsvorrichtung 26 elektrische Einzel-Leistungszeitprognosen von vorzugsweise sämtlichen Mikro-KWK-Anlagen 2 des Kraftwerkssystems 34. Es versteht sich, dass die elektrischen Einzel-Leistungszeitprognosen nicht zeitgleich empfangen werden müssen.

Beispielsweise kann die zentrale Regelungsvorrichtung 26 an die einzelnen Mikro-KWK-Anlagen 2, insbesondere die jeweiligen lokalen Regelungseinrichtungen 24, Anforderungsanfragen senden, woraufhin die jeweiligen Regelungseinrichtungen 24 der Mikro-KWK-Anlagen mindestens eine (aktuelle) elektrische Einzel-Leistungszeitprognose der jeweiligen Mikro-KWK-Anlage 2 als Antwort an die zentrale Regelungsvorrichtung 26 senden kann.

Bevor die Verarbeitung der empfangenen elektrischen Einzel-Leistungszeitprognosen in der zentralen Regelungsvorrichtung 26 beschrieben wird, wird nachfolgend beispielhaft die Bestimmung von elektrischen Einzel-Leistungszeitprognosen einer Mikro-KWK-Anlage 2 erklärt.

Vorzugsweise kann eine Mikro-KWK-Anlage 2 eine Mehrzahl von elektrischen Einzel-Leistungszeitprognosen bestimmen, mit der die Mikro-KWK-Anlage 2 betreibbar ist. Beispielsweise können zumindest zwei positive Einzel-Leistungszeitprognosen, wie eine minimale und eine maximale Einzel-Leistungszeitprognose, bestimmt werden.

Nach der zuvor beschriebenen Erstellung einer thermischen Lastprognose durch die lokale Regelungseinrichtung 24 kann unter Berücksichtigung der aktuellen Speichertemperatur des thermischen Speichers 14 die noch verfügbare thermische Speicherkapazität des thermischen Speichers 14 bestimmt werden. Zunächst kann die noch verfügbare Temperaturspreizung $\Delta T$ nach folgender Formel ermittelt werden:

$$\Delta T = T_{sp,\max} - T_{sp}, \tag{c}$$

wobei $T_{sp,\max}$ die maximal zulässige Speichertemperatur des thermischen Speichers 14 und $T_{sp}$ die aktuell gemessene Temperatur im thermischen Speicher 14 darstellt. Anschließend kann mittels der Temperaturspreizung $\Delta T$ die noch verfügbare thermische Speicherkapazität $\Delta W$ des thermischen Speichers 14 wie folgt ermittelt werden:

$$\Delta W = m \cdot c \cdot \Delta T, \tag{d}$$

wobei m das Speichervolumen des thermischen Speichers 14 und c die spezifische Wärmekapazität des Speicherfluids, beispielsweise von Wasser, darstellt.

Eine beispielhafte thermische Lastprognose eines Einfamilienhauses ist in nachfolgender Tabelle 1 dargestellt:

Tabelle 1

| t[h] | 1 | 2 | 3 | 4 | 5 | 6 | 7 | 8 | 9 |
|---|---|---|---|---|---|---|---|---|---|
| $W_{th,prog}$[kWh] | 1,2 | 2,1 | 0,9 | 0,3 | 0,9 | 1,3 | 1,4 | 1,2 | 1,4 |

In Abhängigkeit der thermischen Kapazitätsgrenze der Mikro-KWK-Anlage 2, insbesondere der thermischen Lastprognose und der noch verfügbaren thermische Speicherkapazität des Speichers 14, kann mindestens eine elektrische Einzel-Leistungszeitprognose, vorzugsweise zumindest eine maximale positive elektrische Einzel-Leistungszeitprognose und eine minimale positive elektrische Einzel-Leistungszeitprognose erstellt werden.

Beispielhaft wird im Folgenden der Betrieb der Mikro-KWK-Anlage 2 unter Minimalleistung (minimale Einzel-Leistungszeitprognose) und Nennleistung (maximale Einzel-Leistungszeitprognose) untersucht. Hierbei wird beispielhaft von einer Mikro-KWK-Anlage 2 mit einer unteren Leistungsgrenze von 1,8 $kW_{el}$/ 5,2 $kW_{th}$ sowie einer Nennleistung von 4,7 $kW_{el}$ / 12,5 $kW_{th}$ ausgegangen.

Unter Berücksichtigung der aktuell verfügbaren Speicherkapazität des thermischen Speichers 14 und der für die nächsten Stunden erwarteten thermischen Last (siehe Tabelle 1), können die elektrischen Leistungszeitprognosen, also die zur Minimalleistung und zur Maximalleistung jeweils zugehörige Laufzeit der Mikro-KWK-Anlage 2 vorzugsweise iterativ ermittelt werden.

Die folgenden Schritte zeigen das Vorgehen am Beispiel der unteren Leistungsgrenze, wobei von einer noch verfügbaren Speicherkapazität $\Delta W$ = 16kWh beispielhaft ausgegangen wird.

In einem ersten Schritt wird die Laufzeit ohne zusätzliche Lastprognose nach folgender Formel bestimmt:

$$t_1 = \frac{\Delta W}{P_{th,\min}} = \frac{16kW}{5,2kW} = 3,08h \,. \qquad \text{(e)}$$

Die mittlere Last gemäß Lastprognose (Tabelle 1) auf Basis der ermittelten Laufzeit $t_1$ ist:

$$P_{D1} = \frac{1,2kWh + 2,1kWh + 0,9kWh + 0,3kWh \cdot 0,08}{t_1} = 1,06kW \,, \qquad \text{(f)}$$

$$W_{D1} = P_{D1} \cdot t_1 = 3,25kWh \,. \qquad \text{(g)}$$

In einem nächsten Schritt wird die Laufzeitbestimmung unter Berücksichtigung der Lastprognose durchgeführt:

$$t_2 = \frac{\Delta W + W_{D1}}{P_{th,\min}} = \frac{16kW + 3,25kW}{5,2kW} = 3,7h \,. \qquad \text{(h)}$$

Die mittlere Last gemäß Lastprognose (Tabellen 1) auf Basis der ermittelten Laufzeit $t_2$ ist:

$$P_{D2} = \frac{1,2kWh + 2,1kWh + 0,9kWh + 0,3kWh \cdot 0,7}{t_2} = 1,19kW \,, \qquad \text{(i)}$$

$$W_{D2} = P_{D2} \cdot t_2 = 4,40kWh \,. \qquad \text{(j)}$$

Dann wird in einem nächsten Schritt die Laufzeitbestimmung unter Berücksichtigung der Lastprognose durchgeführt:

$$t_3 = \frac{\Delta W + W_{D2}}{P_{th,min}} = \frac{16kW + 4,40kW}{5,2kW} = 3,9h\,\text{m} \tag{k}$$

Die mittlere Last gemäß Lastprognose (Tabelle 1) auf Basis der ermittelten Laufzeit $t_3$ ist:

$$P_{D3} = \frac{1,2kWh + 2,1kWh + 0,9kWh + 0,3kWh \cdot 0,9}{t_3} = 1,14kW\,, \tag{l}$$

$$W_{D3} = P_{D3} \cdot t_3 = 4,47kWh\,. \tag{m}$$

Dann wird in einem nächsten Schritt die Laufzeitbestimmung unter Berücksichtigung der Lastprognose durchgeführt:

$$t_4 = \frac{\Delta W + W_{D3}}{P_{th,min}} = \frac{16kW + 4,47kW}{5,2kW} = 3,9h\,. \tag{n}$$

Die mittlere Last gemäß Lastprognose (Tabelle 1) auf Basis der ermittelten Laufzeit $t_3$ ist:

$$P_{D4} = \frac{1,2kWh + 2,1kWh + 0,9kWh + 0,3kWh \cdot 0,9}{t_4} = 1,14kW\,, \tag{o}$$

$$W_{D4} = P_{D4} \cdot t_4 = 4,47kWh\,. \tag{p}$$

An dieser Stelle kann die Iteration abgebrochen werden, da die Abweichung zwischen $W_{D4}$ und $W_{D3}$ kleiner 1% ist und somit ein stabiles Ergebnis erreicht ist.

Die minimale elektrische Einzel-Leistungszeitprognose ist daher 1,8 kW$_{el}$ für eine Zeitdauer bzw. prognostizierte Laufzeit von 3,9 h. Dieses Wertetuppel kann an die zentrale Regelungsvorrichtung 26 übertragen werden.

Die maximale elektrische Einzel-Leistungszeitprognose kann in analoger Weise bestimmt werden. Führt man die obigen Schritte mit der Nennleistung durch, ergibt sich die maximale elektrische Einzel-Leistungszeitprognose zu 4,7 kW$_{el}$ für eine Zeitdauer bzw. prognostizierte Laufzeit von 1,45 h. Auch dieses Wertetuppel kann an die zentrale Regelungsvorrichtung 26 übertragen werden.

Falls die Mikro-KWK-Anlage 2 eingerichtet ist, elektrische Energie in Wärmeenergie beispielsweise mittels des optionalen Heizstab 14.1 zu wandeln, kann vorzugsweise zusätzlich zu den positiven Einzel-Leistungszeitprognose auch mindestens eine negative Leistungszeitprognose bestimmt werden. Für einen beispielsweise dreistufig regelbaren Heizstab 14.1 können vorzugsweise drei negative Einzel-Leistungszeitprognosen bestimmt und übertragen werden, wie nachfolgend beispielhaft beschrieben wird.

Ein beispielhafter Heizstab 14.1 nimmt elektrische Leistung in den verfügbaren Leistungsstufen von 3 kW, 6 kW und 9 kW auf und gibt die dabei produzierte Wärme (bei einem angenommenen Wirkungsgrad von 100%) an den Speicher 14 ab.

Die negativen Einzel-Leistungszeitprognosen können entsprechend den positiven Einzel-Leistungszeitprognosen (siehe Formeln (e) bis (p)) bestimmt werden. Es ergeben sich die folgenden drei negativen Einzel-Leistungszeitprognosen:

8,7 h Laufzeit bei -3,0 kW$_{el}$ (26,1 kWh$_{el}$),
3,4 h Laufzeit bei -6,0 kW$_{el}$ (20,4 kWh$_{el}$),
2,2 h Laufzeit bei -9,0 kW$_{el}$ (19,8 kWh$_{el}$).

Auch diese Wertetuppel bzw. negativen Einzel-Leistungszeitprognosen können an die zentrale Regelungsvorrichtung übertragen werden. Es kann festgestellt werden, dass mit steigender Regelleistung die verfügbare Regelenergie sinkt, da der gleichzeitig stattfindende thermische Verbrauch weniger Einfluss hat.

Es versteht sich, dass bei der Bestimmung einer negativen Einzel-Leistungszeitprognose grundsätzlich auch weitere elektrische Verbraucher 20 im Gebäude und beispielsweise eine prognostizierte elektrische Leistungsprognose für das Gebäude mit berücksichtigt werden können.

Es versteht sich ferner, dass die obigen Bestimmungen der Einzel-Leistungszeitprognosen regelmäßig (z.B. alle 15 min) erneut durchgeführt und aktualisierte Einzel-Leistungszeitprognose erstellt werden können. Zudem versteht es sich, dass die übertragenen Einzel-Leistungszeitprognose eine Identifikationskennung der Mikro-KWK-Anlage 2 umfassen können.

Sind die positiven und/oder negativen elektrischen Einzel-Leistungszeitprognosen vorzugsweise von sämtlichen im Kraftwerksystem 34 angeordneten Mikro-KWK-Anlagen 2 an die zentrale Regelungsvorrichtung 26 übertragen worden, kann insbesondere die zentrale Regelungsvorrichtung 26 in einem Schritt 302 sämtliche empfangene Einzel-Leistungszeitprognosen zu einer Gesamt-Leistungszeitprognose akkumulieren.

Um die Rechenzeit zur Bestimmung der Gesamt-Leistungszeitprognose zu verringern, können in einem ersten Teilschritt zunächst Subnetz-Leistungszeitprognosen für die Mehrzahl an Subnetzen erstellt werden. Beispielsweise kann dies von der zentralen Regelungsvorrichtung 26 durchgeführt werden.

Beispielhaft (obige beispielhafte Werte werden nachfolgend nicht übernommen) sind in nachfolgender Tabelle 2 für zwei Stufen (-3kW und -9kW) die negativen elektrischen Einzel-Leistungszeitprognosen von drei Mikro-KWK-Anlagen 2 (Mikro-KWK 1-3) dargestellt.

Tabelle 2

|  | Laufzeit [h] | Leistung [kW] |
|---|---|---|
| Mikro-KWK 1 | 5,2 | -3 |
| Mikro-KWK 1 | 1,3 | -9 |
| Mikro-KWK 2 | 4,3 | -3 |
| Mikro-KWK 2 | 0,9 | -9 |
| Mikro-KWK 3 | 3,7 | -3 |
| Mikro-KWK 3 | 1,4 | -9 |

Durch Akkumulierung der Werte aus der Tabelle 2 erhält man folgende Tabelle 3 des Subnetzes umfassend die drei Mikro-KWK-Anlagen. Insbesondere erhält man die Tabelle 3 durch folgende Rechenvorschrift (beispielhaft für den Zeitpunkt 3,7h):

$$P_{MN}(3,7) = \min[P_{\text{Mikro-KWK1}}(t \geq 3,7)] + \min[P_{\text{Mikro-KWK2}}(t \geq 3,7)] + \min[P_{\text{Mikro-KWK3}}(t \geq 3,7)] = -9KW \quad (q)$$

Tabelle 3

| Laufzeit [h] | Leistung [kW] |
|---|---|
| 0,9 | -27 |
| 1,3 | -21 |
| 1,4 | -15 |
| 3,7 | -9 |
| 4,3 | -6 |
| 5,2 | -3 |

Auch für alle anderen Zeitpunkte der Tabelle 3 wird die Rechenvorschrift (q) analog angewendet. Prinzipiell besagt die Formel (q), dass eine Mikro-KWK-Anlage 2 immer mit der zu dem betrachteten Zeitpunkt maximal verfügbaren Leistung in die Berechnung aufgenommen wird. Da es sich vorliegend um negative Leistungen handelt, wird in der Gleichung "min" verwendet. Aus der Tabelle 3 ergibt sich beispielsweise, dass das Subnetz für 0.9 h mit einer negativen Regelleistung von -27 kW betrieben werden kann.

Tabelle 4 zeigt die zugehörigen positiven Einzel-Leistungszeitprognosen von den drei Mikro-KWK-Anlagen 1-3, die zu einem Subnetz gebündelt sind. Die dargestellten Werte sind lediglich beispielhaft und lassen sich mittels der Formeln (e) bis (p) bestimmen.

Tabelle 4

|  | Laufzeit [h] | Leistung [kW] |
|---|---|---|
| Mikro-KWK 1 | 3 | 1,8 |
| Mikro-KWK 1 | 0,9 | 4,7 |
| Mikro-KWK 2 | 2,9 | 1,8 |
| Mikro-KWK 2 | 0,9 | 4,7 |
| Mikro-KWK 3 | 3,7 | 1,8 |
| Mikro-KWK 3 | 0,7 | 4,7 |

Durch Akkumulierung der Werte aus der Tabelle 4 erhält man folgende Tabelle 5 des Subnetzes umfassend die drei Mikro-KWK-Anlagen. Insbesondere erhält man die Tabelle 5 durch folgende Rechenvorschrift (beispielhaft für den Zeitpunkt 3,7h):

$$P_{MN}(3,7) = \max[P_{\text{Mikro-KWK1}}(t \geq 3,7)] + \max[P_{\text{Mikro-KWK2}}(t \geq 3,7)] + \max[P_{\text{Mikro-KWK3}}(t \geq 3,7)] = 1{,}8 KW \qquad (r)$$

Tabelle 5

| Laufzeit [h] | Leistung [kW] |
|---|---|
| 0,7 | 14,1 |
| 0,9 | 11,2 |
| 0,9 | 11,2 |
| 2,9 | 5,4 |
| 3 | 3,6 |
| 3,7 | 1,8 |

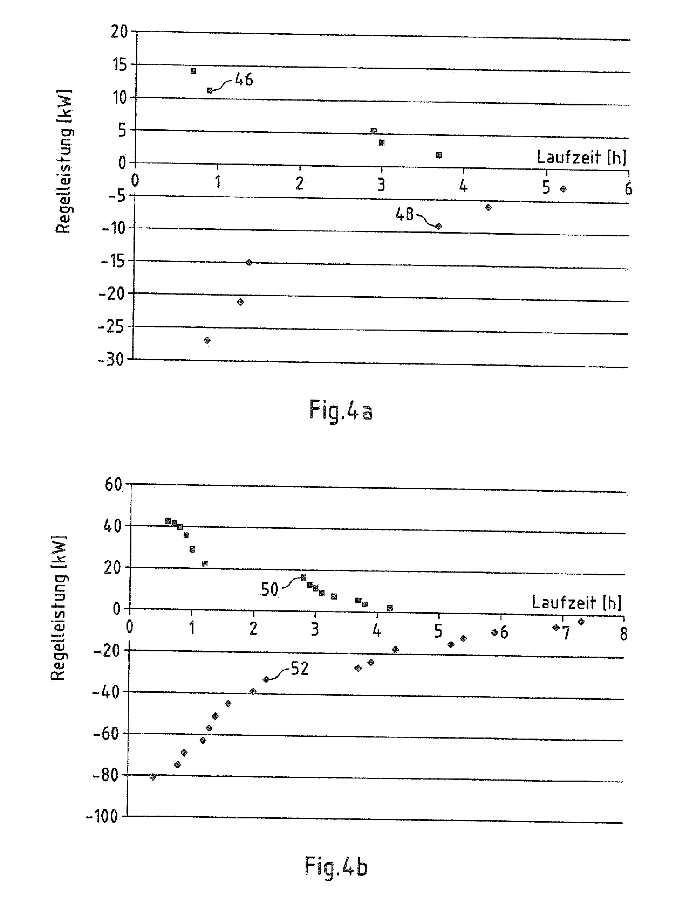

In der Figur 4a sind die Werte aus den Tabellen 3 und 5 aufgetragen. Die mit Bezugszeichen 46 bezeichneten Punkte stellen positive Regelleistungen in Abhängigkeit der Zeit dar, während die mit Bezugszeichen 48 bezeichneten Punkte negative Regelleistungen in Abhängigkeit der Zeit darstellen. Zu beachten ist, dass es sich bei dem Diagramm der Figur 4a um eine Stufenfunktion handelt (die Einzelpunkte dürfen also nicht durch Interpolationslinien miteinander verbunden werden).

Gemäß den obigen Tabellen steht eine positive Regelleistung von 14,1 kW$_{el}$ für maximal 0,7 h und eine positive Regelleistung von 11,2 kW$_{el}$ für maximal 0,9 h zur Verfügung. Eine negative Regelleistung von -27 kW$_{el}$ steht für maximal 0,9 h und eine negative Regelleistung von -3 kW$_{el}$ für maximal 5,2 h zur Verfügung.

Es sei angemerkt, dass sich die Speicherkapazität aus der Fläche unterhalb der Kurve aus Figur 4a ergibt.

Nachdem in einem ersten Teilschritt in Schritt 302 die Subnetz-Leistungszeitprognosen sämtlicher Subnetze bestimmt wurden, kann in einem nächsten Teilschritt entsprechend den Formeln (q) und (r) die Gesamt-Leistungszeitprognose des Kraftwerksystems 34 von der zentralen Regelungsvorrichtung 26 bestimmt werden. Mit anderen Worten können die Subnetz-Leistungszeitprognosen akkumuliert werden. Ein beispielhaftes Ergebnis ist in der Figur 4b dargestellt, die ein Leistungszeitdiagramm eines Ausführungsbeispiels eines Kraftwerksystems 34 gemäß der vorliegenden Erfindung zeigt. Die mit Bezugszeichen 50 bezeichneten Punkte stellen positive Regelleistungen in Abhängigkeit der Zeit dar, während die mit Bezugszeichen 52 bezeichneten Punkte negative Regelleistungen in Abhängigkeit der Zeit darstellen.

In einem nächsten Schritt 303 wird überprüft, ob eine Leistungszeitanfrage von der zentralen Regelungsvorrichtung 26 empfangen wurde. Wird festgestellt, dass keine Leistungszeitanfrage empfangen wurde, so kann mit Schritt 301 fortgefahren werden. Beispielsweise können nach einem vorgebbaren (regelmäßigen) Zeitabstand (z.B. 15 min) erneut aktualisierte Einzel-Leistungszeitprognosen von (sämtlichen) Mikro-KWK-Anlagen 2 des Kraftwerksystems 34 empfangen werden (Schritt 301) und in Schritt 302 eine aktualisierte Gesamt-Leistungszeitprognose erstellt werden.

Wird in Schritt 303 festgestellt, dass eine Leistungszeitanfrage empfangen wurde, so wird in einem nächsten Schritt 304 von der zentralen Regelungsvorrichtung 26 die Leistungszeitanfrage zusammen mit der Gesamt-Leistungszeitprognose ausgewertet.

Gemäß einem ersten Beispiel kann die Leistungszeitanfrage eine bestimmte bzw. gewünschte elektrische Regelleistung für eine bestimmte Zeitdauer bzw. Laufzeit umfassen. Bei der elektrischen Regelleistung kann es sich um eine negative oder positive elektrische Regelleistung handeln. Mit anderen Worten wird eine Anfrage gestellt, ob das Kraftwerksystem 34 zusätzliche elektrische Energie ins Netz 22 einspeisen kann oder ob das Kraftwerksystem 34 elektrische Energie aus dem Netz 22 abführen bzw. verbrauchen kann.

In diesem Fall prüft die zentrale Regelungsvorrichtung 26, ob die gewünschte elektrische Regelleistung für die gewünschte Laufzeit von dem Kraftwerkssystem 34 zur Verfügung gestellt werden kann. Insbesondere kann die gewünschte elektrische Regelleistung für die gewünschte Laufzeit mit der Gesamt-Leistungszeitprognose des Kraftwerkssystems 34 verglichen werden. Wird festgestellt, dass die Leistungszeitfanfrage erfüllt werden kann, wird beispielsweise eine positive Rückantwort erstellt und (ggf. nach einer Bestätigung der anfragenden Partei) in Schritt 305 das Kraftwerkssystem 34, insbesondere die verteilt und entfernt angeordneten einzelnen Mikro-KWK-Anlagen 2, entsprechend von der zentralen Regelungsvorrichtung 26 angesteuert. Die zentrale Regelungsvorrichtung 26 ist insbesondere eingerichtet, Steuerbefehle umfassend elektrische Sollwerte mit zugehörigen Laufzeitangaben zu erstellen und an die jeweiligen lokalen Regelungseinrichtungen 24 der Mikro-KWK-Anlagen 2 zu übertragen.

Für den Fall, dass die Leistungszeitanfrage nicht von dem Kraftwerkssystem 34 erfüllt werden kann, kann eine negative Rückantwort erstellt und an die anfragende Partei gesendet werden. Es versteht sich, dass als Antwort ein Gegenangebot übertragen werden kann mit einem anderen elektrischen Regelleistungswert und/oder einer anderen Laufzeit, die von dem Kraftwerkssystem 34 erfüllt werden kann.

In einem weiteren Beispiel umfasst die Leistungszeitanfrage neben der gewünschten elektrischen Regelleistung und der gewünschten Laufzeit einen zweiten Aufwandsparameter. Der zweite Aufwandsparameter gibt an, wie hoch der Aufwand für die gewünschte elektrische Regelleistung und die gewünschte Laufzeit sein darf.

In diesem Beispiel hat zudem zumindest ein Teil der Mikro-KWK-Anlagen 2 des Kraftwerkssystems 34 ihre mindestens eine Einzel-Leistungszeitprognose mit einem ersten Aufwandsparameter verknüpft und an die zentrale Regelungsvorrichtung 26 in Schritt 301 übertragen. Durch den ersten Aufwandsparameter kann zumindest der für die Bereitstellung der zusätzlichen elektrischen Energie und/oder für die Abnahme der zusätzlichen elektrischen Energie bei der jeweiligen Mikro-KWK-Anlage 2 anfallende Aufwand, wie Verschleiß der Einheiten 6, 14.1, Verbrauchskosten (z.B. Gaskosten), etc. berücksichtig werden. Es versteht sich, dass weitere Faktoren einfließen können. Der erste Verbrauchsparameter stellt daher insbesondere eine Bedingung da. Nur wenn die anfragende Partei zustimmt, den Aufwand entsprechend dem ersten Aufwandsparameter zu übernehmen, steht die positive und/oder negative Regelleistung zur Verfügung.

Die zentrale Regelungsvorrichtung 26 überprüft in diesem Fall, ob die gewünschte elektrische Regelleistung für die gewünschte Laufzeit für den gebotenen zweiten Aufwandsparameter zur Verfügung gestellt werden kann. Insbesondere werden bei der verfügbaren Gesamt-Leistungszeitprognose des Kraftwerkssystems 34 nur die Einzel-Leistungszeitprognosen berücksichtigt, deren erste Aufwandsparameter unterhalb oder gleich dem zweiten Aufwandsparameter sind. Stellt die zentrale Regelungsvorrichtung 26 fest, dass die gewünschte elektrische Regelleistung für die gewünschte Laufzeit für den zweiten Aufwandsparameter zur Verfügung gestellt werden kann, so regelt die zentrale Regelungsvorrichtung 26 die Mikro-KWK-Anlagen 2 in Schritt 305, wie zuvor ausgeführt worden kann. Es versteht sich, dass die Mikro-KWK-Anlagen 2, deren erster Aufwandsparameter über dem zweiten Aufwandsparameter liegt, nicht angesteuert werden.

Wird von der zentralen Regelungsvorrichtung 26 festgestellt, dass die Leistungszeitanfrage nicht erfüllt werden kann, so kann entsprechend den vorherigen Ausführungen eine negative Antwort oder ein Gegenangebot an die anfragende Partei erstellt werden.

Indem das Kraftwerkssystem 34 umfassend eine Vielzahl von entfernt und verteilt angeordneten Mikro-KWK-Anlagen 2 eingerichtet ist, zumindest in Abhängigkeit der thermischen Grenzkapazität der jeweiligen Mikro-KWK-Anlagen 2 negative und positive Regelleistung anzubieten, können gefährliche Schwankungen der Energiemenge im Stromnetz 22 zumindest reduziert werden.

**Patentansprüche**

1. Verfahren zum Betreiben eines Kraftwerkssystems (34) umfassend eine Mehrzahl von verteilt angeordneten Mikro-KWK-Anlagen (2) und mindestens eine mit den verteilt angeordneten Mikro-KWK-Anlagen (2) über mindestens ein Kommunikationsnetz (28) verbundene zentrale Regelungsvorrichtung (26), umfassend:

   - Übertragen von elektrischen Einzel-Leistungszeitprognosen von zumindest einem Teil der verteilt angeordneten Mikro-KWK-Anlagen (2) an die zentrale Regelungsvorrichtung (26),
   - wobei eine elektrische Einzel-Leistungszeitprognose einer Mikro-KWK-Anlage (2) zumindest in Abhängigkeit der thermischen Kapazitätsgrenze der Mikro-KWK-Anlage (2) von der Mikro-KWK-Anlage (2) erstellt wird,
   - Bestimmen von mindestens einer ersten elektrischen Gesamt-Leistungszeitprognose des Kraftwerkssystems (24) durch die zentrale Regelungsvorrichtung (26) durch Akkumulieren der empfangenen Einzel-Leistungszeitprognosen, und
   - Regeln von zumindest einem Teil der verteilt angeordneten Mikro-KWK-Anlagen (2) von der zentralen Regelungsvorrichtung (26) zumindest in Abhängigkeit der bestimmten ersten Gesamt-Leistungszeitprognose des Kraftwerkssystems (34) und einer empfangenen Leistungszeitanfrage.

2. Verfahren nach Anspruch 1, **dadurch gekennzeichnet, dass**

   - von mindestens einer der Mikro-KWK-Anlagen (2) eine Mehrzahl von elektrischen Einzel-Leistungszeitprognosen an die zentrale Regelungsvorrichtung (26) übertragen wird,
   - wobei die Mehrzahl von elektrischen Einzel-Leistungszeitprognosen mindestens eine positive elektrische Einzel-Leistungszeitprognose und/oder mindestens eine negative elektrische Einzel-Leistungszeitprognose umfasst.

3. Verfahren nach Anspruch 2, **dadurch gekennzeichnet, dass** von der mindestens einen Mikro-KWK-Anlage (2) mindestens eine maximale elektrische Einzel-Leistungszeitprognose und mindestens eine minimale elektrische Einzel-Leistungszeitprognose an die zentrale Regelungsvorrichtung (26) übertragen wird.

4. Verfahren nach einem der vorherigen Ansprüche, **dadurch gekennzeichnet, dass**

   - die empfangene Leistungszeitanfrage zumindest eine bestimmte elektrische Regelleistung für eine bestimmte Laufzeit umfasst, und
   - von der zentralen Regelungsvorrichtung (26) zumindest überprüft wird, ob die bestimmte elektrische Regelleistung für die bestimmte Laufzeit von dem Kraftwerkssystem (34) zur Verfügung gestellt werden kann, indem zumindest die bestimmte elektrische Regelleistung für die bestimmte Laufzeit und die Gesamt-Leistungsprognose ausgewertet werden.

5. Verfahren nach einem der vorherigen Ansprüche, **dadurch gekennzeichnet, dass**

   - von mindestes einer Mikro-KWK-Anlage (2) der mindestens einen elektrischen Einzel-Leistungszeitprognose mindestens ein erster Aufwandsparameter der Mikro-KWK-Anlage (2) für die elektrische Einzel-Leistungszeitprognose zugeordnet wird, und
   - von der zentralen Regelungsvorrichtung (26) bei der Bestimmung der Gesamt-Leistungszeitprognose des Kraftwerkssystems (34) der mindestens eine erste Aufwandsparameter berücksichtigt wird.

6. Verfahren nach Anspruch 4 und 5, **dadurch gekennzeichnet, dass**

   - die Leistungszeitanfrage einen zweiten Aufwandsparameter umfasst, und
   - von der zentralen Regelungsvorrichtung (26) überprüft wird, ob die bestimmte elektrische Regelleistung für die bestimmte Laufzeit für den zweiten Aufwandsparameter zur Verfügung gestellt werden kann, indem die bestimmte elektrische Regelleistung für den bestimmten Zeitraum für den zweiten Aufwandsparameter und die von mindestens einem ersten Aufwandsparameter abhängige Gesamt-Leistungszeitprognose ausgewertet wird.

7. Verfahren nach einem der vorherigen Ansprüche, **dadurch gekennzeichnet, dass**

   - die Mikro-KWK-Anlagen (2) eines Niederspannungsnetzes (22, 22.1, 22.2) zu einem Subnetz zusammengefasst werden, und

- die elektrischen Einzel-Leistungszeitprognosen der Mikro-KWK-Anlagen (2) des Subnetzes zu einer elektrischen Subnetz-Leistungszeitprognose akkumuliert werden.

8. Verfahren nach einem der vorherigen Ansprüche, dass die elektrischen Einzel-Leistungszeitprognosen von zumindest einem Teil der Mikro-KWK-Anlagen (2) in vorgegebenen Zeitabständen an die zentrale Regelungsvorrichtung (26) übertragen werden.

9. Kraftwerkssystem (34), umfassend:

- eine zentrale Regelungsvorrichtung (26),
- eine Mehrzahl von verteilt angeordneten und mit der zentralen Regelungsvorrichtung (26) über mindestens ein Kommunikationsnetz (28) verbundenen Mikro-KWK-Anlagen (2),
- wobei zumindest zwei der verteilt angeordneten Mikro-KWK-Anlagen (2) eingerichtet sind, jeweils mindestens eine elektrische Einzel-Leistungszeitprognose an die zentrale Regelungsvorrichtung (26) zu übertragen,
- wobei zumindest die zwei Mikro-KWK-Anlagen (2) eingerichtet sind, jeweils die mindestens eine elektrischen Einzel-Leistungszeitprognose zumindest in Abhängigkeit der thermischen Kapazitätsgrenze der jeweiligen Mikro-KWK-Anlage (2) zu erstellen,
- wobei die zentrale Regelungsvorrichtung (26) eingerichtet ist, eine elektrische Gesamt-Leistungszeitprognose des Kraftwerkssystems (34) durch Akkumulierung der empfangenen Einzel-Leistungszeitprognosen zu bestimmen, und
- die zentrale Regelungsvorrichtung (26) eingerichtet ist, zumindest einen Teil der verteilt angeordneten Mikro-KWK-Anlagen (2) zumindest in Abhängigkeit der bestimmten Gesamt-Leistungszeitprognose des Kraftwerkssystems (34) und einer empfangenen Leistungszeitanfrage zu Regeln.

10. Computerprogramm mit Instruktionen ausführbar auf einem Prozessor derart, dass ein Kraftwerkssystem (34) gemäß dem Verfahren nach einem der Ansprüche 1 bis 8 geregelt wird.

EP 2 843 788 A2

Fig.1

16

Fig.2

Fig.3

Fig.4a

Fig.4b